# EUROPEAN PATENT APPLICATION

(11) **EP 4 510 219 A1**
(43) Date of publication of application: **19.02.2025**
(21) Application number: 24189975.6
(22) Date of filing: 22.07.2024
(51) Int. Cl.: H01M 4/133, H01M 4/134, H01M 4/1393, H01M 4/1395, H01M 4/36, H01M 4/62, H01M 10/0525, H01M 4/04, H01M 4/38, H01M 4/587

(54) **NEGATIVE ELECTRODE FOR RECHARGEABLE LITHIUM BATTERY AND RECHARGEABLE LITHIUM BATTERY INCLUDING SAME**

(30) Priority: 17.08.2023 KR 20230107762
(71) Applicant: SAMSUNG SDI CO., LTD., Giheung-gu Yongin-si, Gyeonggi-do 17084 (KR)
(72) Inventor: LEE, Donghun, 17084 Yongin-si, Gyeonggi-do (KR); OH, Songyul, 17084 Yongin-si, Gyeonggi-do (KR); EOM, Hyeri, 17084 Yongin-si, Gyeonggi-do (KR); LEE, Junkyu, 17084 Yongin-si, Gyeonggi-do (KR); IN, Jinhyuk, 17084 Yongin-si, Gyeonggi-do (KR); SUH, Soonsung, 17084 Yongin-si, Gyeonggi-do (KR); JEONG, Min-young, 17084 Yongin-si, Gyeonggi-do (KR); DO, Uisong, 17084 Yongin-si, Gyeonggi-do (KR); CHAE, Wonhyung, 17084 Yongin-si, Gyeonggi-do (KR)
(74) Representative: Michalski Hüttermann & Partner Patentanwälte mbB

(57) **Abstract**

Disclosed are a negative electrode for a rechargeable lithium battery and a rechargeable lithium battery including the same. The negative electrode includes a current collector; a negative active material layer, and an adhesive layer between the current collector and the negative active material and having a thickness of about 30 µm or less, wherein the adhesive layer comprises a carbon-based material at an amount of about 90 wt% or more based on the total 100 wt% of the adhesive layer.

## Description

### BACKGROUND

### 1. Field

Embodiments of this disclosure relate to a negative electrode for a rechargeable lithium battery and a rechargeable lithium battery including the same.

### 2. Description of the Related Art

A rechargeable lithium battery is a battery exhibiting excellent discharge voltage and high energy density.

Such a battery includes a positive electrode, a negative electrode, and an electrolyte, and the electrode such as the positive electrode and the negative electrode includes a current collector and an active material layer on the current collector.

### SUMMARY

One or more embodiments of the present disclosure provide a negative electrode for a rechargeable lithium battery exhibiting good interface adherence between the current collector and an active material layer.

One or more embodiments provide a rechargeable lithium battery including the negative electrode.

One or more embodiments provide a negative electrode for a rechargeable lithium battery, including a current collector; a negative active material layer; and an adhesive layer between the current collector and the negative active material and having a thickness of about 30 µm or less, wherein the adhesive layer includes a carbon-based material at an amount of about 90 wt% or more based on the total 100 wt% of the adhesive layer.

One or more embodiments provide a negative electrode for a rechargeable lithium battery, including a current collector; a negative active material layer; and an adhesive layer between the current collector and the negative active material, wherein an interface adhesion force between the adhesive layer and the current collector and/or an interface adhesion force between the adhesive layer and the negative active material layer is about 5 gf/mm or more.

Still another embodiment provides a rechargeable lithium battery including the negative electrode; a positive electrode; and a non-aqueous electrolyte.

Other embodiments are included in the following detailed description.

A negative electrode according to one or more embodiments may have improved adherence between a current collector and an active material layer, thereby improving the cycle-life characteristics.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIG. 1 is a schematic diagram showing a negative electrode for a rechargeable lithium battery according to one or more embodiments.
FIG. 2 is a diagram showing a method of preparing the negative electrode for a rechargeable lithium battery according to one or more embodiments.
FIG. 3 is a schematic diagram showing a rechargeable lithium battery according to one or more embodiments.

### DETAILED DESCRIPTION

Hereinafter, embodiments are described in more detail. However, these embodiments are examples, the present disclosure is not limited thereto and the present disclosure is defined by the scope of claims, and equivalents thereof.

Terms used in the specification are used to explain embodiments of the present disclosure, but are not intended limit the present disclosure. Expressions in the singular include expressions in plural unless the context clearly dictates otherwise.

As used herein, the term "combination thereof" may include a mixture, a laminate, a complex, a copolymer, an alloy, a blend, and a reactant of constituents.

As used herein, the term "comprise", "include" or "have" are intended to designate that the recited characteristics, numbers, step, constituted elements, or a combination thereof is present, but it should be understood that the possibility of presence or addition of one or more other characteristics, numbers, steps, constituted element, or a combination are not to be precluded in advance.

The drawings may show that the thickness is enlarged in order to clearly show the various layers and regions, and the same reference numerals are given to similar parts throughout the specification. If an element, such as a layer, a film, a region, a plate, and the like is referred to as being "on" or "over" another part, it may include embodiments where it is "directly on" another element, but also embodiments where there is another element in between. In contrast, if an element is referred to as being "directly on" another element, there are no intervening elements present.

Herein, the term "layer" includes a shape totally formed on the entire surface or a shape partial surface, if viewed from a plane view.

Herein, "or" is not to be construed as an exclusive meaning, for example, "A or B" is construed to include A, B, A+B, and the like.

Unless otherwise defined in the specification, a particle diameter or size may be an average particle diameter. The average particle diameter indicates an average particle diameter (D50) where a cumulative volume is about 50 volume% in a particle distribution. The average particle diameter D50 may be measured by any suitable method used in the art, for example, by a particle size analyzer, a transmission electron microscope image, and/or a scanning electron microscope image. In one or more embodiments, a dynamic light-scattering measurement device is used to perform a data analysis, and the number of particles is counted for each particle size range, and from this, the average particle diameter (D50) value may be easily obtained through a calculation, and/or a laser diffraction method may be used.

A negative electrode for a rechargeable lithium battery according to one or more embodiments includes a current collector, a negative active material layer, and an adhesive layer between the current collector and the negative active material layer. As the adhesive layer is between the current collector and the negative active material layer, the adhesion between the current collector and the negative active material layer may be effectively increased.

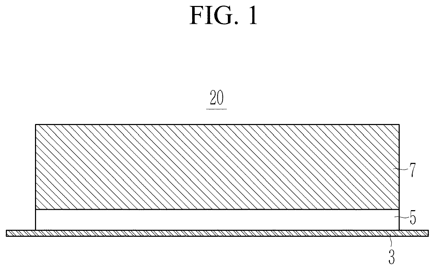

A negative electrode 1, as schematically shown in FIG. 1, includes a current collector 3, an adhesive layer 5, and a negative active material layer 7 which are sequentially provided. FIG. 1 emphasizes that the adhesive layer 5 is thinner than the negative active material layer 7, and merely illustrates the current collector 3, so that it does not necessarily mean that the current collector 3, as shown in FIG. 1, is a thin film that is thinner than the adhesive layer 5 and the negative active material layer 7. For example, the relative thickness of the current collector 3 may be larger than that shown in FIG. 1.

In one or more embodiments, the adhesive layer may have a thickness of about 30 µm or less and may have the carbon-based material of about 90 wt% or more based on the total 100 wt% of the adhesive layer. In one or more embodiments, the adhesive layer may include the carbon-based material of about 90 wt% to about 95 wt% based on the total 100 wt% of the adhesive layer.

As such, the thickness of the adhesive layer is substantially thinner than that of the active material layer. The thickness of the adhesive layer may be about 30 µm or less, about 10 µm to about 30 µm, or about 15 µm to about 30 µm. If the thickness of the adhesive layer is larger than 30 µm, resistance may be increased, and the ratio of the active material layer in the electrode may be reduced, thereby decreasing capacity.

In one or more embodiments, the negative active material layer may have a thickness of about 30 µm to about 120 µm, or about 50 µm to about 100 µm.

A thickness ratio of the adhesive layer to the negative active material layer may be about 1:1 to about 1:4 or about 1:1 to about 1:3.

While the adhesive layer and the negative active material layer may have thicknesses within the thickness ranges described herein, if the thickness ratio of the adhesive layer to the negative active material layer is within the ranges described herein, the adherence of the adhesive layer to the current collector and/or the adherence of the adhesive layer to the negative active material may be more firmly maintained.

In one or more embodiments, the adhesive layer has excellent interface adhesion force to the current collector, and, for example, the interface adhesion force between the adhesive layer and the current collector may be about 5 gf/mm or more. The interface adhesion force between the adhesive layer and the current collector may be about 5 gf/mm to about 10 gf/mm. In one or more embodiments, the interface adhesion force is very high, at about 5 gf/mm or more, indicating that the adhesive layer is well attached to the current collector, and thus, the negative active material layer may be strongly attached by the adhesive layer.

Thus, the separation of the negative active material layer during repeated charge and discharge cycles may be effectively suppressed or reduced, thereby improving cycle-life characteristics.

In one or more embodiments, the adhesive layer includes a carbon-based material and a first binder. For example, the adhesive layer may consist of the carbon-based material and the first binder.

The carbon-based material may be crystalline carbon, amorphous carbon, or a combination thereof. The crystalline carbon may be graphite such as unspecified shape, sheet, flake, spherical and/or fiber shaped natural graphite and/or artificial graphite, and the amorphous carbon may be soft carbon, hard carbon, mesophase pitch carbide, sintered cokes, and/or the like.

As such, the adhesive layer does not include a Si-based material. The Si-based material has more severe volume expansion than the carbon-based material during charging and discharging, and thus, the inclusion of the Si-based material in the adhesive layer may cause adhesion to decrease such that the effects for improving adhesion by providing the adhesive layer between the current collector and the negative active material layer may be not achieved. Thus, it may not be suitable, desirable, or appropriate for the adhesive layer to include the Si-based material.

In one or more embodiments, the negative active material layer also includes a binder, for example, a second binder which is the same as or different from the first binder.

An amount of the first binder may be about 10 wt% or less, or about 3 wt% to about 10 wt% based on the total 100 wt% of the adhesive layer. Based on the total 100 wt% of the negative active material layer and the adhesive layer, an amount of the first binder may be about 5 wt% or less, or about 1 wt% to about 5 wt%. If the amount of the first binder satisfies the ranges herein, the adherence may be further improved, without (e.g., substantially without) an increase in resistance.

An amount of the second binder may be about 3 wt% or less, or about 1 wt% to about 3 wt% based on the total 100 wt% of the negative active material layer. Based on the total 100 wt% of the negative active material layer and the adhesive layer, an amount of the second binder may be about 2.4 wt% or less, or about 1 wt% to about 2.4 wt%.

In one or more embodiments, the first binder may be the same as or different from the second binder. The binder may include a non-aqueous binder, an aqueous binder, or a combination thereof.

The non-aqueous binder may be an ethylene propylene copolymer, polyacrylonitrile, polystyrene, polyvinyl chloride, carboxylated polyvinylchloride, polyvinyl fluoride, polyurethane, polytetrafluoroethylene, polyvinylidene fluoride, polyethylene, polypropylene, polyamide imide, polyimides, or combinations thereof.

The aqueous binder may be a styrene-butadiene rubber (SBR), an acrylated styrene-butadiene rubber (ABR), an acrylonitrile-butadiene rubber, an acryl rubber, a butyl rubber, a fluorine rubber, polyethylene oxide, polyvinyl pyrrolidone, polypropylene, polyepichlorohydrin, polyphosphazene, an ethylene propylene diene copolymer, polyvinyl pyridine, chlorosulfonated polyethylene, latex, a polyester resin, an acrylic resin, a phenolic resin, an epoxy resin, polyvinyl alcohol, or combinations thereof.

In one or more embodiments, if the aqueous binder is used as the first binder and/or the second binder, the aqueous binder may be used together with a cellulose-based compound. The cellulose-based compound includes one or more of carboxymethyl cellulose, hydroxypropylmethyl cellulose, methyl cellulose, and/or alkali metal salts thereof. The alkali metal may be Na, K, and/or Li. If the cellulose-based compound is further used, the cellulose-based compound also serves as a binder, and thus, the total amount of the aqueous binder and the cellulose-based compound may be included in the amount of the binder in each layer.

For example, if the aqueous binder and the cellulose-based compound are used in the adhesive layer, the amounts thereof may be about 10 wt% or less, or about 5 wt% to about 10 wt% based on the total 100 wt% of the adhesive layer. If the aqueous binder and the cellulose-based compound are used in the negative active material layer, the amounts thereof may be about 10 wt% or less, or about 5 wt% to about 10 wt% based on the total 100 wt% of the negative active material layer.

In one or more embodiments, the negative active material layer includes a Si-based active material and a carbon-based active material.

The carbon-based negative active material may be crystalline carbon, amorphous carbon, or a combination thereof, and in one or more embodiments, may be crystalline carbon. The crystalline carbon may include unspecified shaped, sheet shaped, flake shaped, spherical shaped and/or fiber-shaped natural graphite and/or artificial graphite, or a combination thereof, and the amorphous carbon may be soft carbon, hard carbon), mesophase pitch carbide, a sintered coke, and/or the like.

The Si-based active material may be Si, a Si-C composite, SiOₓ (0<x<2), a Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof, and not Si) or combination thereof, or may be at least one of the foregoing materials may be mixed together with SiO₂. The element Q may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

In one or more embodiments, the Si-based active material may be the Si-C composite.

The Si-C composite particles may have an average particle diameter D₅₀, for example, of about 0.5 µm to about 20 µm. According to one or more embodiments, the Si-C composite may include silicon particles and an amorphous carbon coated on the surface of the silicon particles. For example, it may include secondary particles (core) where silicon primary particles are agglomerated and an amorphous carbon coating layer (shell) is on the surface of the secondary particles. The amorphous carbon may be between the silicon primary particles, for example, to coat the silicon primary particles. For example, the amorphous carbon may be present as a coating on the silicon primary particles. The secondary particle may be presented by distributing in an amorphous carbon matrix. For example, the silicon secondary particles may be dispersed in an amorphous carbon matrix.

The Si-C composite may further include crystalline carbon. For example, the Si-C composite may include a core including crystalline carbon and silicon particles, and an amorphous carbon coating layer on the surface of the core. The crystalline carbon may be artificial graphite, natural graphite, or a combination thereof. The amorphous carbon may be soft carbon, hard carbon, mesophase pitch carbide, a sintered coke, and/or the like.

If the Si-C composite includes silicon and amorphous carbon, an amount of the silicon may be, based on 100 wt% of the Si-C composite, about 10 wt% to about 50 wt%, and an amount of the amorphous carbon may be about 50 wt% to about 90 wt%. In one or more embodiments, if the composite includes silicon, amorphous carbon, and crystalline carbon, based on 100 wt% of the Si-C composite, an amount of the silicon may be about 10 wt% to about 50 wt%, an amount of the crystalline carbon may be about 10 wt% to about 70 wt%, and an amount of the amorphous carbon may be about 20 wt% to about 40 wt%.

The amorphous carbon coating layer may have a thickness of about 5 nm to about 100 nm. The silicon may include silicon particles (primary particles) that may have an average particle diameter D₅₀ of about 10 nm to about 1 µm, or about 10 nm to about 200 nm. The silicon particles may include silicon (e.g., may include elemental silicon or may consist of silicon), a silicon alloy, and/or an oxidized form (e.g., oxidized silicon). The oxidized silicon may be represented by SiOₓ (0<x<2). An atomic weight ratio of Si:O representing a degree of oxidation may be about 99:1 to about 33:67. In the present specification, if a definition is not otherwise provided, an average particle diameter D₅₀ indicates an average particle diameter (D50) where a cumulative volume is about 50 volume% in a particle distribution.

In one or more embodiments, a mixing ratio of the Si-based active material and the carbon-based active material may be a weight ratio of about 1:99 to about 99:1, about 1:99 to about 50:50 or a weight ratio of about 5:95 to about 20:80.

If the Si-based active material and the carbon-based active material are used together as the negative active material included in the negative active material layer, higher capacity may be obtained. In the negative electrode according to one or more embodiments, the adhesive layer is included between the active material layer and the current collector, and thus, the separation of the active material layer as repeated charge and discharge cycles are performed may be effectively suppressed or reduced, even if the Si-based active material causing severe volume expansion during charge and discharge is used. Thus, more improved cycle-life characteristics may be obtained according to embodiments of the present disclosure.

The negative active material layer may include a negative active material and a second binder, and, optionally, may further include a conductive material (e.g., an electrically conductive material). If the negative active material layer includes the negative active material and the second binder, based on the total 100 wt% of the negative active material layer, an amount of the second binder may be about 3 wt% or less, or about 2 wt% to about 3 wt%, and an amount of the negative active material may be about 97 wt% or more, or about 97 wt% to about 98 wt%. In one or more embodiments, if the negative active material layer includes the negative active material, the second binder, and the conductive material, based on the total 100 wt% of the negative active material layer, an amount of the second binder may be about 3 wt% or less, or about 2 wt% to about 3 wt%, an amount of the negative active material may be about 96 wt% or more, or about 96 wt% to about 97 wt%, and an amount of the conductive material may be about 1 wt% or less and more than 0 wt%, for example, about 0.01 wt% to about 1 wt%.

The conductive material is included to provide electrode conductivity (e.g., electrical conductivity), and any suitable electrically conductive material may be used as a conductive material unless it causes a chemical change (e.g., an undesirable chemical change in the rechargeable lithium battery), and examples of the conductive material may be a carbon-based material such as natural graphite, artificial graphite, carbon black, acetylene black, ketjen black, a carbon fiber, and the like; a metal-based material of a metal powder and/or a metal fiber including copper, nickel, aluminum, silver, and the like; a conductive polymer such as a polyphenylene derivative; or a mixture thereof. The carbon black may be, for example, acetylene black, Ketjen black, channel black, furnace black, lamp black, thermal black, or a combination thereof.

The current collector may include one selected from a copper foil, a nickel foil, a stainless steel foil, a titanium foil, a nickel foam, a copper foam, a polymer substrate coated with a conductive metal (e.g., an electrically conductive metal), and a combination thereof, but is not limited thereto.

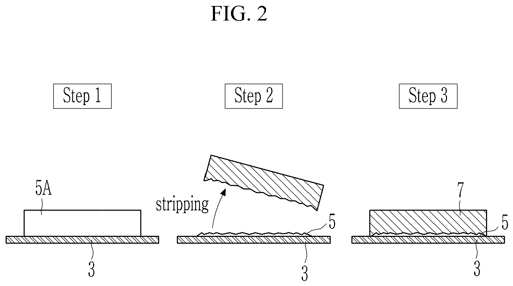

If the negative electrode preparation according to one or more embodiments is performed as illustrated in FIG. 2, a composition for an adhesive layer is coated on a current collector 3 and dried (Step 1). The composition for the adhesive layer includes a carbon-based material, a first binder, and a solvent. The solvent may be adjusted according to the type (or kind) of first binder, and may be water, N-methyl pyrrolidone, or a combination thereof.

In the drying process, an adhesive precursor layer 5A is prepared. The adhesive precursor layer may be prepared to have a thickness of about 50 µm to about 150 µm, or about 70 µm to 120 µm.

Thereafter, some material may be stripped from the adhesive precursor layer to prepare an adhesive layer 5 having a thickness of about 30 µm or less, and/or to have an interface adhesion force of about 5 gf/mm or more (Step 2).

The stripping process may be carried out by attaching an adhesive tape to the adhesive precursor layer and peeling off the adhesive tape, but the stripping process is not limited thereto. Any suitable process may be carried out as long as it strips a suitable amount of material from the adhesive precursor layer.

For example, the method of using the adhesive tape may be carried out by using a double-sided adhesive tape having an adhesion force of about 25 gf/mm or more and about 40 gf/mm or less and peeling off at a speed of about 100 mm/min. In one or more embodiments, the stripping process may be carried out by procedures such as cutting using a blade and/or a laser.

In FIG. 2, the surface of the adhesive layer is shown to be non-uniform, but this is merely shown to clearly distinguish between the adhesive layer and the negative active material layer and is not limited to the shape of the surface of the adhesive layer having a set or predetermined roughness.

Subsequently, a negative active material layer composition is coated on the adhesive layer and dried followed by pressurizing to prepare a negative active material layer 7 (Step 3). The coating, the drying, and the pressurizing may be any suitable processes used for negative electrode preparation, and thus, further descriptions thereof are not necessary here.

The negative active material layer composition includes a negative active material, a second binder, optionally, a conductive material (e.g., an electrically conductive material), and a solvent. The solvent may be adjusted depending on the type (or kind) of the second binder and may be water, N-methyl pyrrolidone, or a combination thereof.

Another embodiment provides a rechargeable lithium battery including the negative electrode, a positive electrode, and a non-aqueous binder.

The positive electrode may include a current collector and a positive active material layer on the current collector. The positive active material may include a compound (lithiated intercalation compound) that is capable of intercalating and deintercalating lithium. In some embodiments, at least one selected from a composite oxide of lithium and a metal selected from cobalt, manganese, nickel, or combinations thereof may be used. For example, the compounds represented by one selected from the following chemical formulae may be used. LiₐA_{1-b}X_{b}D¹₂ (0.90 ≤ a ≤ 1.8, 0 ≤ b ≤ 0.5); LiₐA_{1-b}X_{b}O_{2-c1}D¹_{c1} (0.90 ≤ a ≤ 1.8, 0 ≤ b ≤ 0.5, 0 ≤ c1 ≤ 0.05); LiₐE_{1-b}X_{b}O_{2-c1}D¹_{c1} (0.90 ≤ a ≤ 1.8, 0 ≤ b ≤ 0.5, 0 ≤ c1 ≤ 0.05); LiₐE_{2-b}X_{b}O_{4-c1}D¹_{c1} (0.90 ≤ a ≤ 1.8, 0 ≤ b ≤ 0.5, 0 ≤ c1 ≤ 0.05); LiₐNi_{1-b-c}Co_{b}X_{c}D¹ _{α} (0.90 ≤ a ≤ 1.8, 0 ≤ b ≤ 0.5, 0 ≤ c ≤ 0.5, 0< α ≤ 2); LiₐNi_{1-b-c}Co_{b}X_{c}O_{2-α}T_{α} (0.90 ≤ a ≤ 1.8, 0 ≤ b ≤ 0.5, 0 ≤ c ≤ 0.5, 0< α <2); LiₐNi_{1-b-c}Co_{b}X_{c}O_{2-α}T₂ (0.90 ≤ a ≤ 1.8, 0 ≤ b ≤ 0.5, 0 ≤ c ≤ 0.5, 0 < α < 2); LiₐNi_{1-b-c}Mn_{b}X_{c}D¹_{α} (0.90 ≤ a ≤ 1.8, 0 ≤ b ≤ 0.5, 0 ≤ c ≤ 0.5, 0< α ≤ 2); LiₐNi_{1-b-c}Mn_{b}X_{c}O_{2-α}T_{α} (0.90 ≤ a ≤1.8, 0 ≤ b ≤ 0.5, 0 ≤ c ≤ 0.5, 0< _{α} <2); LiₐNi_{1-b-c}Mn_{b}X_{c}O_{2-α} T₂ (0.90 ≤ a ≤ 1.8, 0 ≤ b ≤0.5, 0 ≤ c ≤ 0.5, 0< α <2); LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1); LiₐNi_{b}Co_{c}L¹_{d}GₑO₂ (0.90 ≤ a ≤ 1.8, 0 ≤ b ≤ 0.9, 0 ≤ c ≤ 0.5, 0 ≤ d ≤ 0.5, 0 ≤ e ≤ 0.1); LiₐNiG_{b}O₂(0.90 ≤ a ≤ 1.8, 0.001 ≤ b ≤ 0.1) LiₐCoG_{b}O₂ (0.90 ≤ a ≤1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); QO₂; QS₂; LiQS₂; V₂O₅; LiV₂O₅; LiZO₂; LiNiVO₄; Li_{(3-f})J₂(PO₄)₃ (0 ≤ f ≤ 2); Li_{(3-f)}Fe₂(PO₄)₃ (0 ≤ f ≤ 2); LiₐFePO₄ (0.90 ≤ a ≤ 1.8).

In the above chemical formulas, A is selected from Ni, Co, Mn, or a combination thereof; X is selected from Al, Ni, Co, Mn, Cr, Fe, Mg, Sr, V, a rare earth element, or a combination thereof; D¹ is selected from O, F, S, P, or a combination thereof; E is selected from Co, Mn, or a combination thereof; T is selected from F, S, P, or a combination thereof; G is selected from Al, Cr, Mn, Fe, Mg, La, Ce, Sr, V, or a combination thereof; Q is selected from Ti, Mo, Mn, or a combination thereof; Z is selected from Cr, V, Fe, Sc, Y, or a combination thereof; J is selected from V, Cr, Mn, Co, Ni, Cu, or a combination thereof; L¹ is selected from Mn, Al, or a combination thereof.

The compounds may have a coating layer on the surface, or the compounds may be mixed together with another compound having a coating layer. The coating layer may include at least one coating element compound selected from the group consisting of an oxide of a coating element, a hydroxide of the coating element, an oxyhydroxide of the coating element, an oxycarbonate of the coating element, and a hydroxyl carbonate of the coating element. The compound for the coating layer may be amorphous and/or crystalline. The coating element included in the coating layer may include Mg, Al, Co, K, Na, Ca, Si, Ti, V, Sn, Ge, Ga, B, As, Zr, or mixture thereof. The coating layer may be provided utilizing a method having no (or substantially no) adverse influence on properties of a positive active material by using these elements in the compound, and for example, the method may include any suitable coating method such as spray coating, dipping, and/or the like, and therefore, further description thereof is not necessary here.

In the positive electrode, an amount of the positive active material may be about 90 wt% to about 98 wt% based on the total weight of the positive active material layer.

In embodiments, the positive active material layer may further include a binder and a conductive material (e.g., an electrically conductive material). The binder and the conductive material may be included in an amount of about 1 wt% to about 5 wt%, respectively based on the total amount of the positive active material layer.

The binder improves binding properties of positive active material particles with one another and with a current collector. Examples of the binder may be polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and/or the like, but is not limited thereto.

The conductive material is included to provide electrode conductivity (e.g., electrical conductivity), and any suitable electrically conductive material may be used as a conductive material unless it causes a chemical change (e.g., an undesirable chemical change in the rechargeable lithium battery). Examples of the conductive material may be carbon-based material such as natural graphite, artificial graphite, carbon black, acetylene black, ketjen black, a carbon fiber and the like; a metal-based material of a metal powder and/or a metal fiber including copper, nickel, aluminum, silver, and the like; a conductive polymer such as a polyphenylene derivative; or a mixture thereof.

The current collector may include Al, but is not limited thereto.

The negative electrode and the positive electrode may be prepared by mixing together an active material, a conductive material (e.g., an electrically conductive material), and a binder in a solvent to prepare an active material composition and coating the composition on a current collector. Such an electrode preparation may be any suitable one used in the art, and thus, further description thereof is not necessary here. The solvent may be N-methyl pyrrolidone, and/or the like, but is not limited thereto. If the aqueous binder is used in the negative electrode, water may be used as a solvent for preparing the negative active material composition.

The non-aqueous electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, and/or aprotic solvent. The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like, the ester-based solvent may include methyl acetate, ethyl acetate, n-propyl acetate, dimethyl acetate, methyl propionate, ethyl propionate, propyl propionate, γ-butyrolactone, decanolide, valerolactone, mevalonolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like, and the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, and may include a double bond, an aromatic ring, and/or an ether bond, and/or the like); amides such as dimethylformamide; dioxolanes such as 1,3-dioxolane, 1,4-dioxolane, and/or the like; sulfolanes, and/or the like.

The organic solvent may be used alone or in a mixture. If the organic solvent is used in a mixture, the mixture ratio may be controlled in accordance with a suitable or desirable battery performance, and may be any suitable one used in the related art.

If the non-aqueous organic solvent is mixed and used, a mixed solvent of a cyclic carbonate and a chain carbonate, a mixed solvent of a cyclic carbonate and a propionate-based solvent, or a mixed solvent of a cyclic carbonate, a chain carbonate, and a propionate-based solvent may be used. The propionate-based solvent may be methyl propionate, ethyl propionate, propyl propionate, or a combination thereof.

If the cyclic carbonate and the chain carbonate or the cyclic carbonate and the propionate-based solvent are mixed together, they may be mixed together in a volume ratio of about 1:1 to about 1:9 and thus performance of an electrolyte may be improved. If the cyclic carbonate, the chain carbonate, and the propionate-based solvent are mixed together, they may be mixed together in a volume ratio of about 1:1:1 to about 3:3:4. The mixing ratios of the solvents may be suitably or appropriately adjusted according to suitable or desirable properties.

The non-aqueous organic solvent may further include an aromatic hydrocarbon-based solvent as well as the carbonate-based solvent. The carbonate-based solvent and aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1.

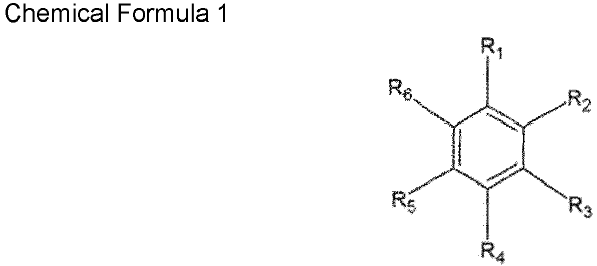

In Chemical Formula 1, R₁ to R₆ are the same or different and are selected from hydrogen, a halogen, a C1 to C10 alkyl group, a haloalkyl group, and a combination thereof.

The examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

The electrolyte may further include vinylethyl carbonate, vinylene carbonate and/or an ethylene carbonate-based compound represented by Chemical Formula 2, as an additive for improving cycle life.

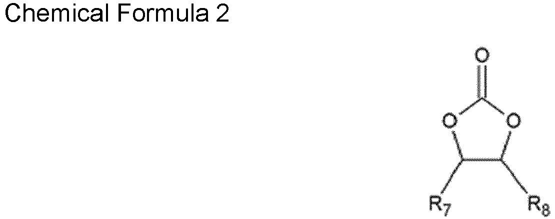

In Chemical Formula 2, R₇ and R₈ are the same or different and may each independently be hydrogen, a halogen, a cyano group (CN), a nitro group (NO₂), or a C1 to C5 fluoroalkyl group, provided that at least one selected from R₇ and R₈ is a halogen, a cyano group (CN), a nitro group (NO₂), or a C1 to C5 fluoroalkyl group, and R₇ and R₈ are not simultaneously hydrogen.

Examples of the ethylene carbonate-based compound may include difluoro ethylenecarbonate, chloroethylene carbonate, dichloroethylene carbonate, bromoethylene carbonate, dibromoethylene carbonate, nitroethylene carbonate, cyanoethylene carbonate, fluoroethylene carbonate, and/or the like. In embodiments using the additive for improving cycle life, an amount of the additive may be suitably controlled within a suitable or appropriate range.

The lithium salt dissolved in an organic solvent supplies a battery with lithium ions, basically operates the rechargeable lithium battery, and improves transportation of the lithium ions between positive and negative electrodes. Examples of the lithium salt include at least one supporting electrolyte salt selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are integers of 1 to 20, lithium difluoro(bisoxolato) phosphate), LiCl, LiI, LiB(C₂O₄)₂ (lithium bis(oxalato) borate: LiBOB) and/or lithium difluoro(oxalato)borate (LiDFOB). A concentration of the lithium salt may range from about 0.1 M to about 2.0 M. If the lithium salt is included at the above concentration range, an electrolyte may have excellent performance and lithium ion mobility due to suitable or optimal electrolyte conductivity and viscosity.

A separator may be between the positive electrode and the negative electrode depending on a type (or kind) of a rechargeable lithium battery. The separator may use polyethylene, polypropylene, polyvinylidene fluoride or multi-layers thereof having two or more layers and may be a mixed multilayer such as a polyethylene/polypropylene double-layered separator, a polyethylene/polypropylene/polyethylene triple-layered separator, a polypropylene/polyethylene/polypropylene triple-layered separator, and/or the like.

The separator may include a porous substrate and a coating layer including a ceramic on at least one side of the porous substrate. The ceramic may include SiO₂, Al₂O₃, Al(OH)₃, AlO(OH), TiO₂, BaTiO₂, ZnO₂, Mg (OH)₂, MgO, Ti (OH)₄, ZrO₂, aluminum nitride, silicon carbide, boron nitride or a combination thereof.

According to one or more embodiments, the separator may include a composite porous separator including a porous substrate and a functional layer on the porous substrate of the composite porous separator. The functional layer may have additional functions, for example, may be at least one selected from a heat-resistance layer and an adhesive layer. The heat-resistance layer may include a heat-resistance resin and, optionally, a filler. The adhesive layer may include an adhesive resin and, optionally, a filler. The filler may be an organic filler, an inorganic filler, or combinations thereof. The heat-resistance resin, the adhesive, and a filler resin may be any suitable materials which may be used in a separator in the related art.

The rechargeable lithium battery may be classified into a lithium ion battery, a lithium ion polymer battery, or a lithium polymer battery depending on the types (or kinds) of the separator and the electrolyte, may be classified into cylindrical, prismatic, coin-type, or pouch-type depending on the shape of the rechargeable lithium battery, and may be classified into a bulk type (or kind) or a thin film type (or kind) depending on a size of the rechargeable lithium battery. The structure and fabrication of such batteries may be any suitable ones used in the related arts, and thus, further description thereof is not necessary here.

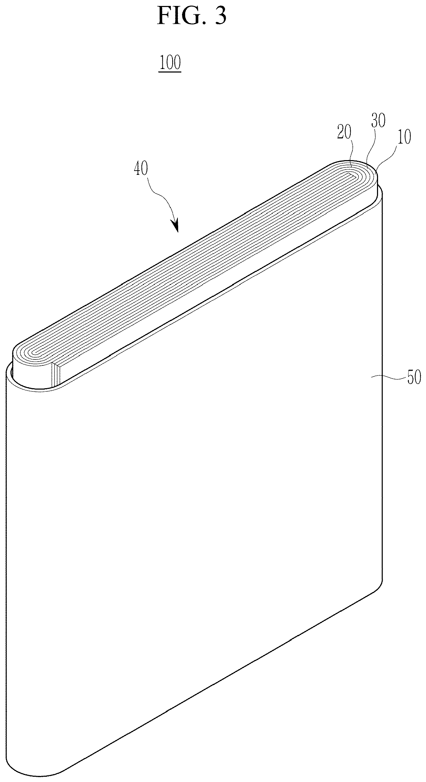

FIG. 3 is an exploded perspective view of a rechargeable lithium battery according to one or more embodiments. The rechargeable lithium battery according to one or embodiment is illustrated as a prismatic battery but is not limited thereto and may include variously-shaped batteries such as a cylindrical battery, a pouch battery, and the like.

Referring to FIG. 3, a rechargeable lithium battery 100 according to one or embodiments may include an electrode assembly 40 manufactured by winding a separator 30 between a positive electrode 10 and a negative electrode 20 and a case 50 housing the electrode assembly 40. An electrolyte may be impregnated in the positive electrode 10, the negative electrode 20, and the separator 30.

Hereinafter, examples of the present disclosure and comparative examples are described. These examples, however, are not in any sense to be interpreted as limiting the scope of the disclosure. The negative electrode in the Examples and the Comparative Examples were prepared based on the negative electrode design having a current density of 5.8 mAh/cm² in a full cell.

### Example 1

95 wt% of artificial graphite, 1 wt% of carboxymethyl cellulose, and 4 wt% of a styrene-butadiene rubber binder were mixed together in water to prepare an adhesive layer composition.

91.5 wt% of artificial graphite, 6 wt% of a silicon-carbon composite, 1 wt% of carboxymethyl cellulose, and 1.5 wt% of a styrene butadiene rubber were mixed together in a water solvent to prepare a negative active material layer slurry.

The silicon-carbon composite included a core including silicon nano particles and a soft carbon coating layer on the surface of the core. An amount of the silicon nano particles, based on the total amount of the silicon-carbon composite, was 40 wt% and an amount of the amorphous carbon was 60 wt%. A thickness of the soft carbon coating layer was 20 nm and the silicon nano particles had an average particle diameter (D50) of 100 nm.

The adhesive layer composition was coated on a Cu current collector and dried to prepare an adhesive precursor layer having a thickness of 80 µm.

An adhesive tape having an adhesion force of 32 gf/mm was attached to the adhesive precursor layer and peeled off using a tensile tester at a speed of 100 mm/min under a 180 degree (°) peel test method, forming an adhesive layer having a thickness of 21 µm.

The negative active material layer slurry was coated on the adhesive layer and dried followed by pressurizing to prepare a negative active material layer, thereby obtaining a negative electrode.

In the prepared negative electrode, the thickness of the adhesive layer was 21 µm and the thickness of the negative active material layer was 64 µm. An active mass density of the negative active material layer was 1.59 g/cm².

### Example 2

A negative electrode was prepared by substantially the same procedure as in Example 1, except for attaching an adhesive tape having an adhesion force of 27 gf/mm and peeling off by substantially the same procedure to prepare an adhesion layer having a thickness of 29 µm and an active material layer having a thickness of 62 µm.

### Example 3

A negative electrode was prepared by substantially the same procedure as in Example 1, except that an adhesive layer composition prepared by mixing together 93 wt% of artificial graphite, 1 wt% of carboxymethyl cellulose, and 6 wt% of a styrene-butadiene rubber binder in a water solvent. In the prepared negative electrode, the thickness of the adhesive layer was 21 µm and the thickness of the negative active material layer was 62 µm.

### Example 4

A negative electrode was prepared by substantially the same procedure as in Example 3, except that 89.5 wt% of artificial graphite, 8 wt% the silicon-carbon composite used in Example 1, 1 wt% of carboxymethyl cellulose, and 1.5 wt% of a styrene-butadiene rubber were mixed together in a water solvent to prepare a negative active material layer slurry and an adhesive layer having a thickness of 21 µm and an active material layer having a thickness of 60 µm were prepared.

### Example 5

91 wt% of artificial graphite, 1 wt% of carboxymethyl cellulose, and 8 wt% of a styrene-butadiene rubber binder were mixed together in water to prepare an adhesive layer composition.

87.5 wt% of artificial graphite, 10 wt% of the silicon-carbon composite used in Example 1, 1 wt% of carboxymethyl cellulose, and 1.5 wt% of a styrene-butadiene rubber were mixed together in a water solvent to prepare a negative active material layer slurry. The adhesive layer composition and the negative active material layer slurry were used to prepare an adhesive layer having a thickness of 23 µm and an active material layer having a thickness of 54 µm, thereby preparing a negative electrode by substantially the same procedure as in Example 3.

### Comparative Example 1

91.5 wt% of artificial graphite, 6 wt% of the silicon-carbon composite used in Example 1, 1 wt% of carboxymethyl cellulose, and 1.5 wt% of a styrene-butadiene rubber were mixed together in a water solvent to prepare a negative active material layer slurry.

The negative active material layer slurry was coated on a Cu foil current collector, dried, and pressurized, to prepare a negative active material layer, thereby preparing a negative electrode. In the prepared negative electrode, the thickness of the negative active material layer was 91 µm. An active mass density of the negative active material layer was 1.60 g/cm².

### Comparative Example 2

89 wt% of artificial graphite, 6 wt% of a silicon-carbon composite, 1 wt% of carboxymethyl cellulose, and 4 wt% of a styrene-butadiene rubber were mixed together in a water solvent to prepare a first negative active material layer slurry.

91.5 wt% of artificial graphite, 6 wt% of a silicon-carbon composite, 1 wt% of carboxymethyl cellulose, and 1.5 wt% of a styrene-butadiene rubber were mixed together in a water solvent to prepare a second negative active material layer slurry.

The silicon-carbon composite included a core including silicon nano particles and a soft carbon coating layer on the surface of the core. An amount of the silicon nano particles was, based on the total amount of the silicon-carbon composite, 40 wt% and an amount of the amorphous carbon was 60 wt%. A thickness of the soft carbon coating layer was 20 nm and the silicon nano particles had an average particle diameter D50 of 100 nm.

The first negative active material layer slurry was coated on a Cu current collector and dried to prepare a first negative active material layer.

The second negative active material layer slurry was coated on the first negative active material layer, dried, and pressurized, to prepare a second negative active material layer, thereby preparing a negative electrode.

In the prepared negative electrode, the thickness of the first negative active material layer was 48 µm and the thickness of the second active material layer was 44 µm. An active mass density of the second negative active material layer was 1.59 g/cm².

### Comparative Example 3

95 wt% of artificial graphite, 1 wt% of carboxymethyl cellulose, and 4 wt% of a styrene-butadiene rubber were mixed together in a water solvent to prepare a first negative active material layer slurry.

91.5 wt% of artificial graphite, 6 wt% of silicon-carbon composite, 1 wt% of carboxymethyl cellulose, and 1.5 wt% of a styrene-butadiene rubber were mixed together in a water solvent to prepare a second negative active material layer slurry. The active material slurries were used to prepare a first negative active material having a thickness of 59 µm and a second negative active material layer having a thickness of 46 µm by using substantially the same procedure as in Comparative Example 2, thereby preparing a negative electrode.

### Experimental Example 1: Evaluation of interface adhesion force

The interface adhesion force between the current collector and the coating layer of Examples 1 to 5 were evaluated by using a tensile tester (available from SHIMADZU Corporation) according to a 90 degree (°) peel test method at a condition of 100 mm/min. The interface adhesion force between the current collector and the active material layer of Comparative Example 1, and the interface adhesion force between the current collector and the first negative active material of Comparative Examples 2 and 3 were measured.

The results are shown in Table 1.

### Experimental Example 2: Evaluation of interface resistance characteristic

The resistance for the electrodes according to Examples 1 to 5 and Comparative Examples 1 to 3 were respectively measured five times using a 46-pin resistance meter (available from HIOKI, Co., Ltd.) with the measurement standards set to 10 mA and 10 Ω. The average value of the measured values are shown in Table 1.

### Experimental Example 3: Evaluation of ion impedance characteristic

The electrodes of Examples 1 to 5 and Comparative Examples 1 to 3 were respectively cut into 2.5 cm horizontally and 4 cm vertically, and then symmetric cells were fabricated by using the same electrodes. The ion impedance was measured. The results are shown in Table 1.

**Table 1**

| | Interface adhesion force (gf/mm) | Interface resistance (10⁻²_{*}Ωcm²) | Ion impedance (Ωcm²) |
|---|---|---|---|
| Example 1 | 5.15 | 0.027 | 24.7 |
| Example 2 | 5.23 | 0.022 | 27.9 |
| Example 3 | 6.11 | 0.03 | 25.0 |
| Example 4 | 6.08 | 0.029 | 21.8 |
| Example 5 | 7.74 | 0.033 | 19.9 |
| Comparative Example 1 | 1.67 | 0.041 | 31.2 |
| Comparative Example 2 | 4.87 | 0.027 | 27.9 |
| Comparative Example 3 | 5.05 | 0.033 | 28.5 |

As shown in Table 1, Examples 1 to 5 including the adhesion layer including 90 wt% or more of the carbon-based material between the current collector and the negative active material layer exhibited excellent interface adhesion force of 5.15 gf/mm or more, low interface resistance of 0.33 10⁻²*Ωcm² or less, and low ion impedance of 27.9 Ωcm² or less.

Comparative Example 1 including no adhesive layer exhibited extremely low interface adhesion force and excellent interface resistance and ion impedance.

Comparative Examples 2 and 3 including no adhesion layer and two negative active material layers, exhibited slightly increased adhesion force, which was still lower than Examples, and high ion impedance.

While the subject matter of this disclosure has been described in connection with what is presently considered to be practical example embodiments, it is to be understood that the present disclosure is not limited to the disclosed embodiments, but, on the contrary, is intended to cover various modifications and equivalent arrangements included within the spirit and scope of the appended claims, and equivalents thereof. Therefore, the aforementioned embodiments should be understood to be examples but not limiting the present disclosure in any way.

## Claims

1. A negative electrode (1) for a rechargeable lithium battery (100), comprising:
a current collector (3);
a negative active material layer (7); and
an adhesive layer (5) between the current collector (3) and the negative active material and having a thickness of about 30 µm or less,
wherein the adhesive layer (5) comprises a carbon-based material at an amount of about 90 wt% or more based on the total 100 wt% of the adhesive layer (5).

2. A negative electrode (1) for a rechargeable lithium battery (100), comprising:
a current collector (3);
a negative active material layer (7); and
an adhesive layer (5) between the current collector (3) and the negative active material,
wherein an interface adhesion force between the adhesive layer (5) and the current collector (3) is about 5 gf/mm or more, preferably about 5 gf/mm to about 10 gf/mm.

3. The negative electrode (1) for a rechargeable lithium battery (100) as claimed in claim 1 or 2, wherein the negative active material layer (7) comprises a Si-based active material and a carbon-based active material.

4. The negative electrode (1) for a rechargeable lithium battery (100) as claimed in any of the claims 1 to 3, wherein the adhesive layer (5) has a thickness of about 10 µm to about 30 µm

5. The negative electrode (1) for a rechargeable lithium battery (100) as claimed in any of the claims 1 to 4, wherein the negative active material layer (7) has a thickness of about 30 µm to about 120 µm.

6. The negative electrode (1) for a rechargeable lithium battery (100) as claimed in any of the claims 1 to 5, wherein the adhesive layer (5) comprises a first binder, preferably in an amount of the first binder is about 10 wt% or less, more preferably about 3 wt% to about 10 wt% based based on the total 100 wt% of the adhesive layer (5)., and
the negative active material layer (7) includes a second binder, preferably in an amount of the second binder is about 3 wt% or less, preferably about 1 wt% to about 3 wt% based on the total 100 wt% of the negative active material layer (7).

7. The negative electrode (1) for a rechargeable lithium battery (100) as claimed in any of the claims 1 to 6, wherein based on the total amount of the negative active material layer (7) and the adhesive layer (5),
an amount of the first binder is about 1 wt% or more and about 5 wt% or less based on the total 100 wt% of the negative active material and the adhesive layer.

8. The negative electrode (1) for a rechargeable lithium battery (100) as claimed in any of the claims 1 to 7, wherein based on the total 100 wt% of the adhesive layer (5) and the negative active material layer (7),
an amount of the second binder is about 1 wt% or more and about 2.4 wt% or less.

9. The negative electrode (1) for a rechargeable lithium battery (100) as claimed in any of the claims 1 to 8, wherein the adhesive layer (5) is prepared by coating an adhesive layer (5) composition on the current collector (3) and drying to prepare an adhesive precursor layer, and
partially stripping the adhesive precursor layer.

10. The negative electrode (1) for a rechargeable lithium battery (100) as claimed in any of the claims 1 to 9, wherein the first binder and the second binder are the same as or different from each other.

11. The negative electrode (1) for a rechargeable lithium battery (100) as claimed in any of the claims 1 to 10, wherein the carbon-based material comprises crystalline carbon, amorphous carbon, or a combination thereof.

12. The negative electrode (1) for a rechargeable lithium battery (100) as claimed in any of the claims 1 to 11, wherein the negative active material layer (7) comprises a Si-based active material and a carbon-based active material.

13. The negative electrode (1) for a rechargeable lithium battery (100) as claimed in any of the claims 1 to 12, wherein the adhesive layer (5) has a thickness of about 10 µm to about 30 µm.

14. The negative electrode (1) for a rechargeable lithium battery (100) as claimed in any of the claims 1 to 13, wherein the adhesive layer (5) comprises a first binder, and
the negative active material layer (7) includes a second binder.

15. A rechargeable lithium battery (100), comprising:
a negative electrode (1) as claimed in any one of claim 1 to claim 14;
a positive electrode (10); and
a non-aqueous electrolyte.
